# EUROPEAN PATENT APPLICATION

(11) **EP 3 026 780 A1**
(43) Date of publication of application: **01.06.2016**
(21) Application number: 15196438.4
(22) Date of filing: 26.11.2015
(51) Int. Cl.: H02J 7/00

(54) **PORTABLE MULTIFUNCTIONAL POWER BANK DEVICE**

(30) Priority: 29.11.2014 JP 2014006337 U
(71) Applicant: Cotac Co., Ltd, Kanagawa-ken 253-0041 (JP); Masterhold Int'l Co., Ltd., New Taipei City 231 (TW)
(72) Inventor: OZAKA, Hisao, Chigasaki-shi, Kanagawa-ken, 253-0041 (JP); TAKAHASHI, Masahiro, Chigasaki-shi, Kanagawa-ken, 253-0041 (JP); KO, Chyi-Ho, 231 New Taipei City (TW); LO, Kai-Yao, 231 New Taipei City (TW)
(74) Representative: Viering, Jentschura & Partner mbB Patent- und Rechtsanwälte

(57) **Abstract**

A portable multifunctional power bank device includes a built-in battery (10), a protection circuit (20), a charger (26), a DC to AC Inverter (29), and a LED lighting circuit (30). The built-in battery (10) provides a Direct current. The protection circuit (20) is connected to the built-in battery (10) to control charging and discharging. The charger (26) is connected to the built-in battery (10), wherein the charger (26) has an input terminal (27) connected to a Mains power supply, and the Mains power supply charges to the built-in battery (10) through the charger (26). The DC to AC Inverter (29) is connected to the built-in battery (10), wherein the DC to AC Inverter (29) has an input terminal (27) for inputting an Alternating-current. The LED lighting circuit (30) is connected to the built-in battery (10) to supply power to the LED lighting circuit (30).

## Description

### BACKGROUND OF THE INVENTION

### 1. Field of the Invention

The instant disclosure relates to a multifunctional power bank. In particular, to a portable multifunctional power bank device which has light weight, high depth of discharge and fast charge rate, and it can be used for a long time with these functions working at the same time.

### 2. Description of Related Art

In recent years, more and more people like to enjoy outdoor leisure activities such as camping. In order to make outdoor activities more fulfilling, there are more and more people bring communication equipment (e.g., TV or FM radio) and entertainment devices (e.g., game) into the tent. These types of electrical products are mostly used individually. In addition, in the event of a disaster, to enable people feel with ease mind at night, the lighting equipment is indispensable, and if a mobile phone or simple household appliances are available for use, it can strengthen people's sense of security. Furthermore, when the power outage occurs, or there is a power failure, a lighting or emergency power needed for household appliances is absolutely necessary. Hence, the demand for a portable multifunctional power bank device is increasing which can provide power for DC electrical products and small lighting equipment.

However, the lead-acid battery of the conventional multifunctional portable power bank devices have problems such as less electrical capacity, big size, heavy weight, and being difficult to carry. Additionally, the traditional multifunctional portable power bank device has not sufficient power for auxiliary functions, which cannot meet many requirements for consumers.

To overcome the abovementioned problems, the purpose of this invention is to produce a light weight, high depth of discharge and fast charge portable multifunctional power bank device which can be used for a long time with these functions working at the same time.

### SUMMARY OF THE INVENTION

In order to achieve the above purpose of this invention, this creation provides a portable multifunctional power bank device.

The portable multifunctional power bank device of this invention includes a set of built-in batteries, a protection circuit, a charger, a DC to AC Inverter, and a LED lighting circuit. The built-in battery provides a Direct current. The protection circuit is connected to the built-in battery to control charging and discharging. The charger is connected to the built-in battery, wherein the charger has an input terminal connected to an Adapter, and the Adapter charges to the built-in battery. The DC to AC Inverter is connected to the built-in battery, wherein the DC to AC Inverter has an output terminal for Alternating-current, and the Direct current provided from the built-in battery is converted into the Alternating-current for home appliances & 3C products power supply through the DC to AC Inverter. The LED lighting circuit is connected to the built-in battery to be supplied power to the LED lighting circuit.

Preferably, the built-in battery is a Lithium-Ferrum Phosphate battery.

Preferably, the portable multifunctional power bank device further includes a car cigarette lighter socket which is connected to the protection circuit.

Preferably, the car cigarette lighter socket is connected to the built-in battery through the protection circuit.

Preferably, the portable multifunctional power bank device further includes a device body and a LED lighting module, wherein the device body receives the built-in battery, the protection circuit, the charger, the DC to AC Inverter, the LED lighting circuit, and the LED lighting module is laid out on the device body.

Preferably, the portable multifunctional power bank device further includes a device body and a LED lighting switch, wherein the device body receives the built-in battery, the protection circuit, the charger, the DC to AC Inverter, the LED lighting circuit, and the LED lighting switch is laid out on the device body.

Preferably, the portable multifunctional power bank device further includes a device body and a Speaker, wherein the device body receives the built-in battery, the protection circuit, the charger, the DC to AC Inverter, the LED lighting circuit, and the Speaker is laid out on the device body.

Preferably, the portable multifunctional power bank device further includes a device body and a Vehicle self-rescue socket, wherein the device body receives the built-in battery, the protection circuit, the charger, the DC to AC Inverter, the LED lighting circuit, and the Vehicle self-rescue socket is laid out on the device body.

Preferably, the portable multifunctional power bank device further includes a device body and a radio, wherein the device body receives the built-in battery, the protection circuit, the charger, the DC to AC Inverter, the LED lighting circuit, and the radio is laid out on the device body.

Preferably, the portable multifunctional power bank device includes the built-in battery which is a Lithium-Ferrum Phosphate battery and has a nano-composite structure material.

According to all of the above, the portable multifunctional power bank device of the invention combines the functions of communication equipment such as radio and lighting equipment. When natural disasters causes a power failure, the portable multifunctional power bank device is also able to provide illumination, further provides emergency power for the household appliances, so as to improve convenience and strengthen people's sense of security.

In order to further appreciate all the characteristics and technical contents of the instant disclosure, references are hereunder made to the detailed descriptions and appended drawings in connection with the instant disclosure. However, the appended drawings are merely shown for exemplary purposes, rather than being used to restrict the scope of the instant disclosure.

### BRIEF DESCRIPTION OF THE DRAWINGS

FIG 1A shows an external schematic view of a portable multifunctional power bank device of an embodiment in the instant creation;
FIG 1B shows an internal schematic view of a portable multifunctional power bank device of an embodiment in the instant creation;
FIG 2A shows a schematic side view of a portable multifunctional power bank device of an embodiment in the instant creation;
FIG 2B shows another schematic side view of a portable multifunctional power bank device of an embodiment in the instant creation; and
FIG 3 shows a circuit configuration figure of composition elements of a portable multifunctional power bank device of the instant creation.

### DETAILED DESCRIPTION OF THE PREFERRED EMBODIMENTS

Embodiments disclosed in the instant disclosure are illustrated via specific examples as follows, and people familiar in the art may easily understand the advantages and efficacy of the instant disclosure by disclosure of the specification. The instant disclosure may be implemented or applied by other different specific examples, and each of the details in the specification may be applied based on different views and may be modified and changed under the existence of the spirit of the instant disclosure. The figures in the instant disclosure are only for brief description, but they are not depicted according to actual size and do not reflect the actual size of the relevant structure. The following embodiments further illustrate related technologies of the instant disclosure in detail, but the scope of the instant disclosure is not limited herein.

### 1. Device Configuration

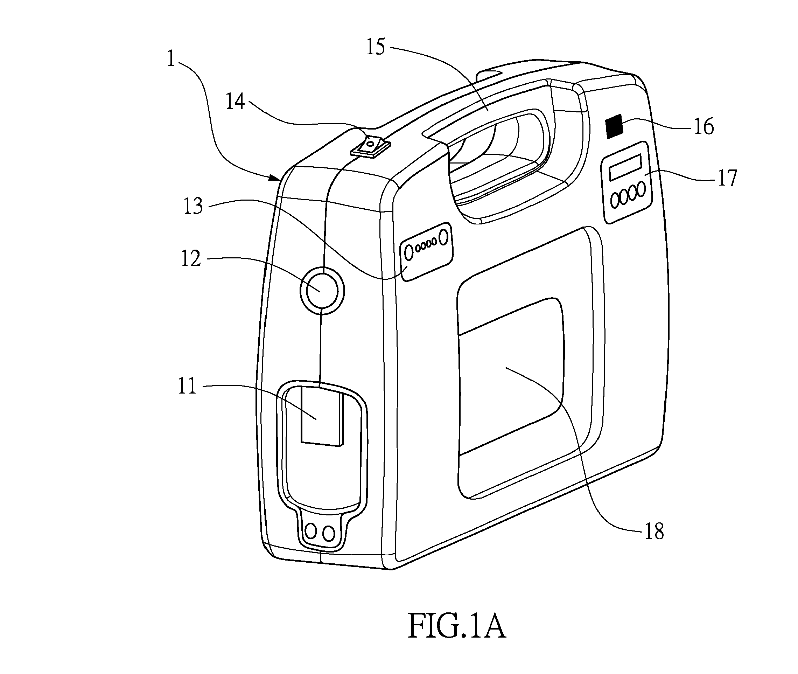

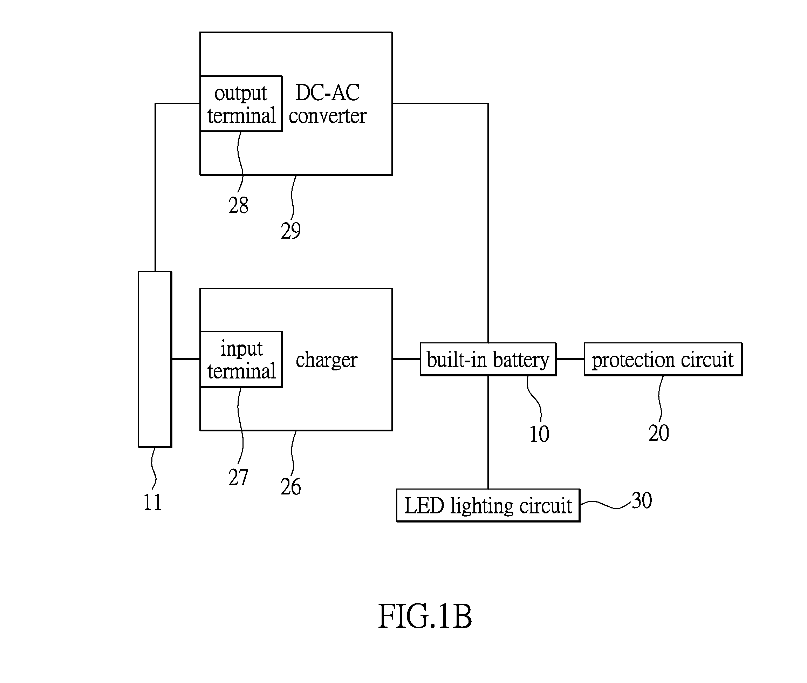

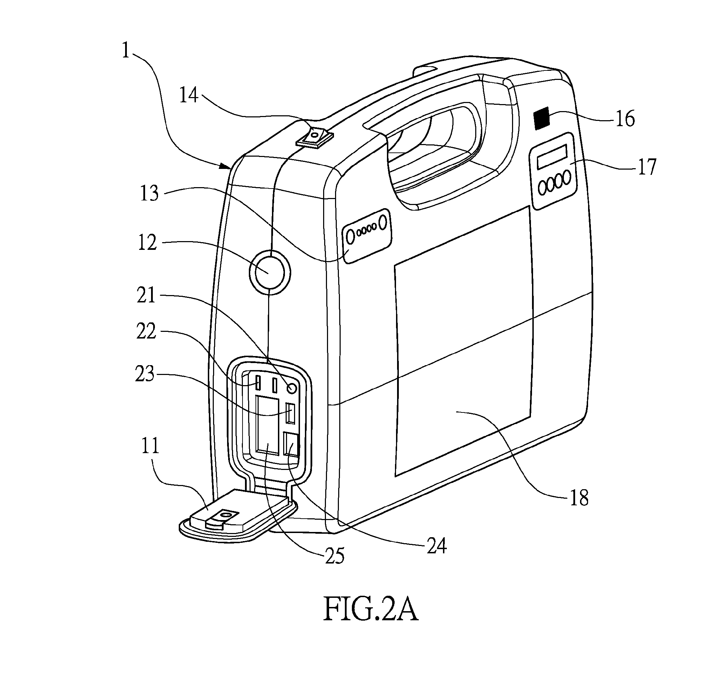

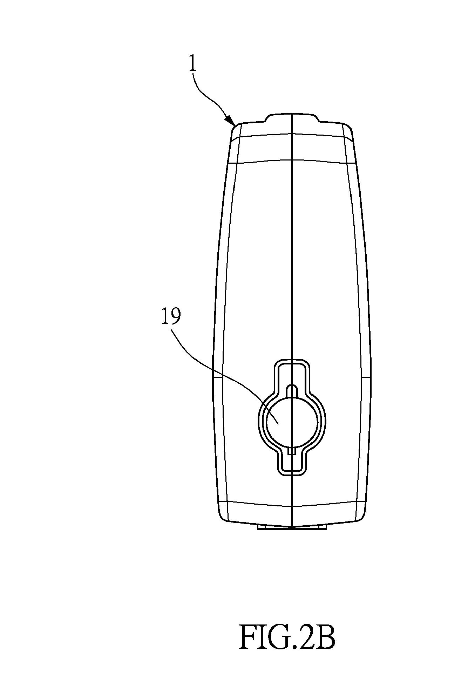

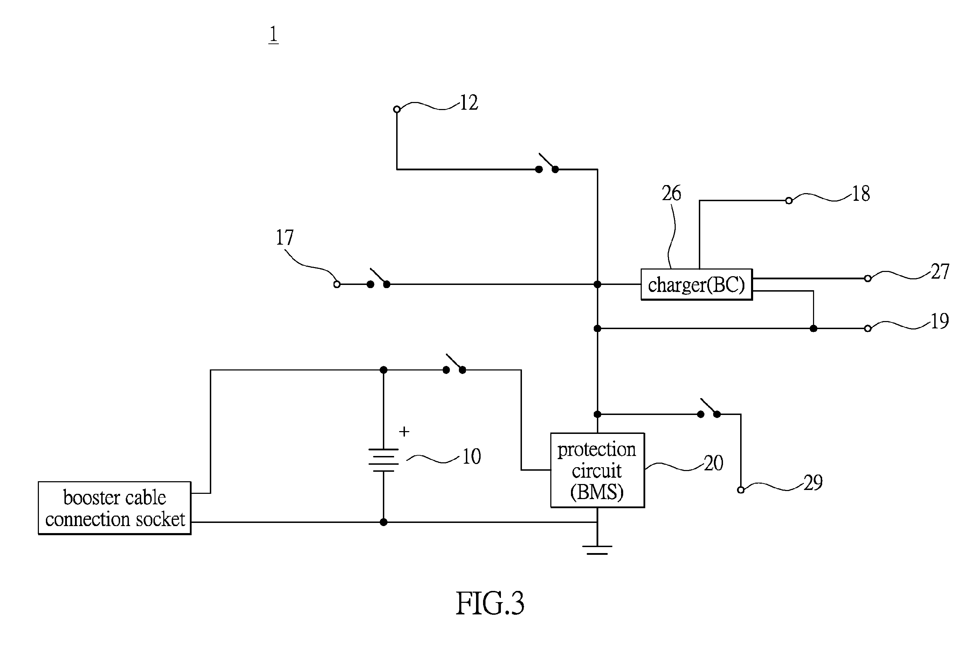

Please refer to FIGs 1A to 3. FIG 1A shows an external schematic view of a portable multifunctional power bank device of an embodiment of the instant invention. FIG 1B shows an internal schematic view of a portable multifunctional power bank device of an embodiment of the instant invention. FIG 2A shows a schematic side view of a portable multifunctional power bank device of an embodiment of the instant invention. FIG 2B shows another schematic side view of a portable multifunctional power bank device of an embodiment of the instant invention. FIG 3 shows a circuit layout drawing of composition elements of a portable multifunctional power bank device of the instant invention.

As shown in FIGs 1A and 1B, a portable multifunctional power bank device of the instant invention includes a built-in battery 10, a protection circuit 20, a charger 26, a DC to AC Inverter 29, and a LED lighting circuit 30. The built-in battery 10 provides a direct current. The protection circuit 20 is connected to the built-in battery 10 to control charging and discharging 10. The charger 26 is connected to the built-in battery 10, wherein the charger 26 has an input terminal 27 connected to a Adapter, and the Adapter charges to the built-in battery 10 through the charger 26. The DC to AC Inverter 29 is connected to the built-in battery 10, wherein the DC to AC Inverter 29 has an output terminal 28 for Alternating-current, and the Direct current provided from the built-in battery 10 is converted into the Alternating-current for home appliances & 3C products power supply through the DC to AC Inverter 29. The LED lighting circuit 30 is connected to the built-in battery 10 to supply power to the LED lighting circuit 30.

As shown in FIGs 1A and 2A, the portable multifunctional power bank device of the instant invention further includes a device body 1 and a LED lighting module 18. The device body 1 incorporates the built-in battery 10, the protection circuit 20, the charger 26, the DC to AC Inverter 29, and the LED lighting circuit 30, and the device body 1 has a left side surface which is disposed with an input & output terminal cover 11 and a 1 watt LED lighting unit 12. A 6 watt LED lighting module 18, a battery status indicator 13, a radio 17, and a speaker 16 are disposed on the device body 1 having a front surface with speaker holes. A LED lighting switch 14 and a handle 15 are disposed on an upper surface of the device body 1. The battery status indicator 13 can be used to judge a remaining capacity of a rechargeable battery. The 1 watt LED lighting unit 12 can be used as a flashlight. A transparent cover is disposed at an outer side surface of the device body 1 for protecting the 6 watt LED lighting module 18 disposed inside of the transparent cover, so as to provide superior space lighting. Furthermore, the radio 17 is used to broadcast music stations or emergency news.

As shown in FIG 2B, a car cigarette lighter socket 19 can be disposed at a right side surface of the device body 1, which is a car cigarette lighter supplied power to 12V/24V electrical products. Additionally, the built-in battery 10 also can be charged in a car (referring to FIG 3). Depending on the above conditions, the portable multifunctional power bank device of this invention can be cooperatively used with a general car cigarette lighter socket 19 and a connecting cable of a voltage converter. A fuse (not shown) is disposed among a protection circuit (BMS) 20 for preventing overcurrent.

Next, opening the input & output terminal cover 11, a charging socket 21, an AC outlet 22, a USB socket 23, an output switch 24, and a DC Jack socket 25 are disposed inside of the output terminal cover 11 at the left side surface of the device body 1. The battery of the portable multifunctional power bank device of this invention is used as a power supply, and simple electrical products can be used outdoors.

### 2. Device Internal Structures

The main internal composition elements composing the portable multifunctional power bank device of this invention are described hereinafter. As shown in FIG 3, in an internal space of the device body 1 of the portable multifunctional power bank device, a central processing unit (CPU) (not shown) utilizes a read only memory (ROM) (not shown) which is pre-stores various implementation programs to control each hardware operation. The input terminal 27 is used to input an alternating current (AC) mains power supply (AC100∼240[V]). The charger 26 utilizes the AC mains power supply (AC100∼240[V]) to charge the built-in battery 10. The DC to AC Inverter 29 is used to convert a direct current (DC12 [V]) provided from the built-in battery 10 into the Alternating-current (AC100 [V]) for home appliances & 3C products power. The AC output terminal 28 (as shown in FIG 2) is used to output an AC power supply (AC100 [V]) converted from the DC to AC Inverter 29. A monitor (not shown) is used to display the condition of the protection circuit (BMS) 20. An input & output terminal (not shown) is used to connected to the car cigarette lighter socket 19. In addition, in order to prevent overcurrent, the input & output terminal connects to the battery through a fuse (not shown).

### [Protection Circuit]

The protection circuit (BMS) 20 of this creation is a control system for the built-in battery 10. It can instantly show the total voltage and the remaining amount of the built-in battery 10, and can monitor the input and output current, the voltage and temperature of each battery. In addition, the protection circuit (BMS) 20 also has a warning function for over discharging and over charging, and also controls a dedicated charger and shows the condition of the dedicated charger through the display. The display is a liquid crystal display device.

During charging, the protection circuit (BMS) 20 monitors the voltage connected in series of each of the built-in batteries 10, and communicates with the charger (BC) 26 before achieving to the pre-set upper limit voltage value. When achieving to the pre-set upper limit voltage value, it stops charging. When the voltage drops to the pre-set return voltage value of the protection circuit (BMS) 20, the charger (BC) 26 is communicated with the protection circuit (BMS) 20 again to begin charging. Repeating the above steps, the voltage of the built-in batteries 10 can remain balance. Furthermore, when the voltage, current, or temperature is abnormal, for safety, it will stop to charge at once.

During discharging, the protection circuit (BMS) 20 monitors the voltage of the built-in battery 10. When the voltage drops below the pre-set lower limit voltage value, the display shows the condition, and an alarm device (not shown) makes sound to warn the overcurrent condition of the built-in battery 10. When the voltage rises to the pre-set return voltage value of the protection circuit (BMS) 20, the alarm device is re-set. Via controlling the discharging condition of the built-in battery 10, the built-in battery 10 can be effectively utilized and its lifetime can be prolonged.

### [Built-in Battery]

The built-in battery 10 of this creation is a Lithium-Ferrum Phosphate battery which utilizes iron phosphate lithium-ion (LiFePO₄) to be an anode. The rechargeable battery having the anode of LiFePO₄ and the rechargeable battery having the anode of lithium cobalt oxide (LiCoO₂) are compared, and the lithium iron phosphate (LiCoO₂) battery has less resource constraint and more discharging current amount. Therefore, the LiCoO₂ battery has expanded market share in recent years. Although the LiCoO₂ battery has problems such as less storage capacity per unit volume and low discharge rate, due to a new material of nano-composite structure composed from crystalline ultrafine particle aggregate being developed, a drawback of the conventional material of the LiCoO₂ battery can be solved by the characteristic of the new material. Compared to LiCoO₂. it is safer to utilize LiFePO₄ as the anode material, owing to Fe-P-O has stronger binding force than Co-O. Even if under the battery short-circuiting or overheating, the O atom is still difficult to be detached, and such as stability of redox energy can help the ion's movement. Hence, the lithium ion (LIB) rechargeable battery has superior characteristics, for example, high capacity per unit, high thermal stability during operation, and good safety, and it also contributes lightweight to make the portable multifunctional power bank device.

### [Charger]

The charger (BC) 26 of this invention is an equipment that can use Mains power supply (AC100∼240 [V]) to charge the direct current (DC12 [V]) to the built-in battery 10. The charger (BC) 26 of this invention also is essential equipment that can prevent the built-in battery 10 from damage due to long time use. The method of charging has a taper charging method and timer charging method, but in the embodiment of this invention, using one step charging method. Via the protection circuit (BMS) 20 controlling the step charging, it can charge the built-in battery 10 to full power in a short time.

### [DC to AC Inverter]

The DC to AC Inverter (D/A Inv) 29 of this creation is an equipment that can convert the direct current (DC 12 [V]) provided from the built-in battery 10 to Alternating-current (AC100 [V]).

### [Car Cigarette Lighter Socket]

The car cigarette lighter socket 19 of this creation is a car cigarette lighter supplied power to 12V/24V electrical products. Additionally, the built-in battery 10 also can be charging in a car through the car cigarette lighter socket 19. Depending on the above conditions, the portable multifunctional power bank device of this invention can be cooperatively used with the general car cigarette lighter socket 19 and a connecting cable of a voltage converter. A fuse is disposed among a protection circuit (BMS) 20 for preventing overcurrent.

In summary, the portable multifunctional power bank device of this invention includes a built-in battery 10, a protection circuit 20, a charger 26, a DC to AC Inverter 29, and an LED lighting circuit 30. The built-in battery 10 provides a Direct current. The protection circuit 20 is connected to the built-in battery 10 to control charging and discharging 10. The charger 26 is connected to the built-in battery 10, wherein the charger 26 has an input terminal 27 connected to Mains power supply, and the Mains power supply charges to the built-in battery 10 through the charger 26. The DC to AC Inverter 29 is connected to the built-in battery 10, wherein the DC to AC Inverter 29 has an output terminal 28 for outputting Alternating-current, and the Direct current provided from the built-in battery 10 is converted into the Alternating-current for home appliances & 3C products through the DC to AC Inverter 29. The LED lighting circuit 30 is connected to the built-in battery 10 to supply power to the LED lighting circuit 29.

Accordingly, the portable multifunctional power bank device of this invention has industrial applicability. Therefore, when outdoors or during disasters, the portable multifunctional power bank device can be compatibly used with various household appliances, and has high portability.

The descriptions illustrated supra set forth simply the preferred embodiments of the instant disclosure; however, the characteristics of the instant disclosure are by no means restricted thereto. All changes, alterations, or modifications conveniently considered by those skilled in the art are deemed to be encompassed within the scope of the instant disclosure delineated by the following claims.

## Claims

1. A portable multifunctional power bank device, comprising:
a built-in battery (10) providing a Direct current,
a protection circuit (20) connected to the built-in battery (10) to control charging and discharging,
a charger (26) connected to the built-in battery (10), wherein the charger (26) has an input terminal (27) connected to Mains power supply, and the Mains power supply charges to the built-in battery (10) through the charger (26);
a DC to AC Inverter (29) connected to the built-in battery (10), wherein the DC to AC Inverter (29) has an output terminal (28) for outputting Alternating-current, and the Direct current provided from the built-in battery (10) is converted into the Alternating-current for home appliances and 3C products through the DC to AC Inverter (29), and
a LED lighting circuit (30) which is connected to the built-in battery (10) to supply power to the LED lighting circuit (30).

2. The portable multifunctional power bank device as claimed in claim 1, wherein the built-in battery (10) is a rechargeable battery.

3. The portable multifunctional power bank device as claimed in claim 1, further comprising: a car cigarette lighter socket (19) which is connected to the DC to AC Inverter (29).

4. The portable multifunctional power bank device as claimed in claim 3, wherein the car cigarette lighter socket (19) is connected to the built-in battery (10) through the DC to AC Inverter (29).

5. The portable multifunctional power bank device as claimed in claim 1, further comprising: a device body (1) and a LED lighting module (18), wherein the device body (1) receives the built-in battery (10), the protection circuit (20), the charger (26), the DC to AC Inverter (29), the LED lighting circuit (30), and the LED lighting module (18) is disposed on the device body (1).

6. The portable multifunctional power bank device as claimed in claim 1, further comprising: a device body (1) and a LED lighting switch (14), wherein the device body (1) incorporates the built-in battery (10), the protection circuit (20), the charger (26), the DC to AC Inverter (29), the LED lighting circuit (30), and the LED lighting switch (14) is disposed on the device body (1).

7. The portable multifunctional power bank device as claimed in claim 1, further comprising: a device body (1) and a speaker (16), wherein the device body (1) receives the built-in battery (10), the protection circuit (20), the charger (26), the DC to AC Inverter (29), the LED lighting circuit (30), and the speaker (16) is disposed on the device body (1).

8. The portable multifunctional power bank device as claimed in claim 1, further comprising: a device body (1) and a Vehicle self-rescue socket (25), wherein the device body (1) receives the built-in battery (10), the protection circuit (20), the charger (26), the DC to AC Inverter (29), the LED lighting circuit (30), and the Vehicle self-rescue socket (25) is laid out on the device body (1).

9. The portable multifunctional power bank device as claimed in claim 1, further comprising: a device body (1) and a radio (17), wherein the device body (1) receives the built-in battery (10), the protection circuit (20), the charger (26), the DC to AC Inverter (29), the LED lighting circuit (30), and the radio (17) is disposed on the device body (1).

10. The portable multifunctional power bank device as claimed in claim 1, wherein the built-in battery (10) is a Lithium-Ferrum Phosphate battery.
